# EUROPEAN PATENT APPLICATION

(11) **EP 4 603 676 A1**
(43) Date of publication of application: **20.08.2025**
(21) Application number: 25151635.7
(22) Date of filing: 14.01.2025
(51) Int. Cl.: F01D 5/00, B25H 1/00, B66C 23/48, F01D 25/28, F16M 3/00

(54) **AIRCRAFT ENGINE STNAD**

(30) Priority: 14.02.2024 GB 202402009
(71) Applicant: Rolls-Royce plc, London N1 9FX (GB)
(72) Inventor: Jepson, Thomas D, Derby, DE24 8BJ (GB)
(74) Representative: Rolls-Royce plc

(57) **Abstract**

A flat-packable engine stand (100, 150, 200, 300, 400, 500, 600) for an engine (50) includes a pair of base beams (102A, 102B), a forward support (110), and a rear support (114). The forward support (110) and the rear support (114) include a pair of forward support members (112A, 112B) and a pair of rear support members (116A, 116B), respectively, that are configured to engage opposing sides of the engine (50). At least one of the forward support (110) and the rear support (114) further includes a pair of telescoping legs (120A, 120B), a pair of hydraulic rams (122A, 122B) coupled to and configured to telescopically actuate a respective telescoping leg (120A, 120B), and a hydraulic pipe (124) fluidly communicating the pair of hydraulic rams (122A, 122B). The hydraulic pipe (124) is configured to allow a flow of a hydraulic fluid (126) between the pair of hydraulic rams (122A, 122B).

## Description

### Field

The present disclosure relates to a flat-packable engine stand for an engine, e.g., an aircraft engine.

### Background

Engines (e.g., gas turbine engines) are bulky machines that need to be installed onto an aircraft/vehicle to power the aircraft/vehicle and occasionally removed for maintenance and repair purposes. Some engines are assembled from modules, and maintenance and repair operations typically involve disassembling and reassembling those modules. During engine build and transportation activities, engines are typically supported on an engine stand that supports the engine from dedicated ground handling points.

For example, European patent EP 3715592 B1 discloses a flat-packable gas turbine engine maintenance stand for a gas turbine engine that comprises modules including an engine core module that houses a high pressure compressor and a turbine module that houses a low pressure turbine. The maintenance stand has a pair of base beams, each base beam having a first end, a midsection and a second end. The stand has an engine core module support that straddles the pair of base beams at their midsection, the engine core module support having engine core module support arms that are configured to engage opposing sides of the engine core module of the gas turbine engine. The stand also has a turbine module support that straddles the pair of beams adjacent their second ends, the turbine module support having turbine module support arms that are configured to engage opposing sides of the turbine module of the gas turbine engine. The gas turbine engine maintenance stand is useful for disassembling and reassembling modules of a gas turbine engine in order to maintain the gas turbine engine for safety and performance purposes.

Engine stands generally feature a balancing system to ensure that the engine is stable, or more specifically statically determinate. Without the balancing system, the engine may undergo torsional loading when supported on the engine stand. In such cases, it may be difficult to determine a load-share between the ground handling points during engine handling scenarios due to tolerances in both the engine stand and the ground handling points, thereby risking overloading of the engine and the engine stand that may cause potentially expensive damage to the engine and create a significant health and safety concern given the weight of the engine.

Current balancing systems of the engine stand typically include a balance beam having three separate structural sections that are pinned together, allow the balance beam to automatically adjust to the engine. However, an ability of the balance beam to withstand lateral loads is very limited, thereby requiring a more complex and expensive structure to prevent the subsequent movements. Additionally, the current balancing systems require space under the engine at the ground handling points. This may limit an opportunity to reduce an overall height of the engine during transportation, particularly by air freight, thereby increasing a cost of transportation of the engine.

### Summary

According to a first aspect, there is provided a flat-packable engine stand for an engine. The flat-packable engine stand includes a pair of base beams spaced apart from each other. Each base beam includes a first end and a second end that is opposite to the first end. The flat-packable engine stand further includes a forward support that straddles the pair of base beams between their respective first ends and their respective second ends. The forward support includes a pair of forward support members that are configured to engage opposing sides of the engine. The flat-packable engine stand further includes a rear support that straddles the pair of base beams adjacent their respective second ends. The rear support includes a pair of rear support members that are configured to engage the opposing sides of the engine rear of the forward support. At least one of the forward support and the rear support further includes a pair of telescoping legs. Each telescoping leg is operatively coupled to and configured to actuate a respective forward support member from the pair of forward support members or a respective rear support member from the pair of rear support members. At least one of the forward support and the rear support further includes a pair of hydraulic rams. Each hydraulic ram is operatively coupled to and configured to telescopically actuate a respective telescoping leg from the pair of telescoping legs. At least one of the forward support and the rear support further includes a hydraulic pipe fluidly communicating the pair of hydraulic rams to each other. The hydraulic pipe is configured to allow a flow of a hydraulic fluid between the pair of hydraulic rams.

The engine stand is flat-packable, i.e. it may be disassembled allowing convenient, space-efficient, and cost-efficient storage and/or transportation.

The forward support members of the forward support and the rear support members of the rear support are configured to engage the opposing sides (or ground handling points) of the engine. Each telescoping leg is configured to actuate the respective forward support member or the respective rear support member. Each hydraulic ram is configured to telescopically actuate the respective telescoping leg from the pair of telescoping legs. Further, the hydraulic pipe fluidly communicates the pair of hydraulic rams to each other, allowing the flow of the hydraulic fluid between the pair of hydraulic rams. This may enable the pair of telescoping legs to balance the opposing sides of the engine through exchange of the hydraulic fluid, thereby allowing the flat-packable engine stand and the engine to be statically determinate. In other words, if the ground handling points of the engine are not in a same vertical position, the flat-packable engine stand may account for this by exchanging the hydraulic fluid between the pair of hydraulic rams. Specifically, each telescoping leg may allow movement of the respective forward support member or the respective rear support member to balance the opposing sides of the engine. The opposing sides of the engine may automatically balance based on exchange of the hydraulic fluid between the pair of hydraulic rams.

Additionally, the flat-packable engine stand of the present disclosure utilizes the pair of telescoping legs which ensures that the respective hydraulic ram is exposed to vertical loads only. Thus, the pair of telescoping legs may be capable of withstanding lateral loads when compared to balance beams of current designs, thereby allowing a greater load-share between the forward support and the rear support of the engine stand. This may in turn reduce the complexity of the flat-packable engine stand, and therefore, the cost of the flat-packable engine stand. Furthermore, the hydraulic pipe may not require to be positioned directly beneath the engine, thereby allowing the engine to be lowered close to the pair of base beams. This may optimise an overall package size of the engine and the engine stand for transportation purposes, thereby increasing opportunities to reduce transportation costs.

In some embodiments, each telescoping leg is directly coupled to and configured to telescopically acuate the respective forward support member or the respective rear support member. This may allow each telescoping leg to directly actuate the respective forward support member or the respective rear support member to balance the opposing sides of the engine.

In some embodiments, at least one of the forward support and the rear support further includes a transverse beam extending between and coupled to the pair of base beams. At least one of the forward support and the rear support further includes a pair of vertical beams extending from opposing ends of the transverse beam towards the pair of forward support members or the pair of rear support members. Each vertical beam at least partially and slidably receives therein a respective telescoping leg from the pair of telescoping legs.

The transverse beam may ensure stability of the pair of base beams and may support the pair of vertical beams. Thus, the transverse beam may enhance a robustness of the flat-packable engine stand during transportation of the engine and/or maintenance. The pair of vertical beams may allow the respective telescoping leg to move along a vertical direction only, thereby restricting lateral loads on the respective telescoping leg and stabilizing the respective telescoping leg. Thus, the pair of vertical beams may allow the forward support and the rear support to maintain their position with respect to the pair of base beams when supporting the engine.

In some embodiments, each hydraulic ram is received within a respective vertical beam from the pair of vertical beams. This may ensure that the pair of hydraulic rams is exposed to vertical loads only.

In some embodiments, the hydraulic pipe is at least partially received within the transverse beam. This may allow the hydraulic pipe to be positioned on the flat-packable engine stand while protecting the hydraulic pipe.

In some embodiments, at least one of the forward support and the rear support further includes a pair of vertical beams. Each vertical beam includes a first end and a second end that is opposite to the first end. The first end of each vertical beam is directly coupled to the respective forward support member or the rear support member. At least one of the forward support and the rear support further includes a first linkage pivotally coupled to the second end of one vertical beam from the pair of vertical beams. At least one of the forward support and the rear support further includes a second linkage pivotally coupled to the second end of the other vertical beam from the pair of vertical beams. One telescoping leg from the pair of telescoping legs is pivotally coupled to and configured to telescopically actuate the first linkage. The other telescoping leg from the pair of telescoping legs is pivotally coupled to and configured to telescopically actuate the second linkage.

The one telescoping leg from the pair of telescoping legs is indirectly coupled to the respective forward support member or the rear support member via the first linkage and the respective vertical beam, thereby allowing the one telescoping leg to actuate the forward support member or the rear support member. Further, the other telescoping leg from the pair of telescoping legs is indirectly coupled to the respective forward support member or the rear support member via the second linkage and the respective vertical beam, thereby allowing the other telescoping leg to actuate the forward support member or the rear support member.

In some embodiments, one hydraulic ram from the pair of hydraulic rams is pivotally coupled to the first linkage. The one hydraulic ram is operatively coupled to the one telescoping leg. The other hydraulic ram from the pair of hydraulic rams is pivotally coupled to the second linkage. The other hydraulic ram is operatively coupled to the other telescoping leg. Thus, the first linkage may provide support to the one hydraulic ram from the pair of hydraulic rams and the second linkage may provide support to the other hydraulic ram from the pair of hydraulic rams.

In some embodiments, the first linkage includes a first link pivotally coupled to the second end of the one vertical beam and the one telescoping leg at a first pivot point. Advantageously, the first pivot point may allow the second end of the one vertical beam to rotate relative to the one telescoping leg.

In some embodiments, the first linkage further includes a second link pivotally coupled to the first link at a second pivot point spaced apart from the first pivot point. The second link is pivotally couped to the one hydraulic ram at a third pivot point spaced apart from each of the first pivot point and the second pivot point. Advantageously, the second pivot point may allow the first link to rotate relative to the second link and the third pivot point may allow the one hydraulic ram to rotate relative to the second link.

In some embodiments, the second linkage includes a first link including a first arm and a second arm inclined to the first arm. The first arm is pivotally coupled to the second end of the other vertical beam at a first pivot point. The second arm is pivotally coupled to the other telescoping leg at a second pivot point spaced apart from the first pivot point. Advantageously, the first pivot point may allow the first arm to rotate relative to the second end of the other vertical beam and the second pivot point may allow the other telescoping leg to rotate relative to the second arm.

In some embodiments, the second linkage further includes a second link pivotally coupled to the first link at a third pivot point spaced apart from each of the first pivot point and the second pivot point. The second link is pivotally coupled to the other hydraulic ram at a fourth pivot point spaced apart from each of the first pivot point, the second pivot point, and the third pivot point. Advantageously, the third pivot point may allow the second link to rotate relative to the first link and the fourth pivot point may allow the other hydraulic ram to rotate relative to the second link.

In some embodiments, at least one of the forward support and the rear support further includes a hydraulic pump fluidly coupled to the hydraulic pipe. Advantageously, the hydraulic pump may provide pressurized hydraulic fluid to each of the pair of hydraulic rams, thereby allowing the respective telescoping leg to be raised or lowered. Therefore, a vertical height of the engine on the flat-packable engine stand may be raised or lowered based on application requirements. This may enable reduction in the overall package size of the engine and the engine stand for transportation purposes. Additionally, this may also enable raising or lowering of the engine during build up or maintenance. Additionally, this may allow raising or lowering of the engine where an engine axis requires levelling, e.g., on an uneven floor. Additionally, this may enable a rear end of the engine to be lowered to clear components on a pylon of an aircraft during installation/removal of the engine from a wing of the aircraft.

In some embodiments, the engine is a gas turbine engine including an engine core that houses at least one compressor and at least one turbine. The engine core includes an upstream end and a downstream end. The pair of forward support members are configured to engage the engine core adjacent to the upstream end of the engine core. The pair of rear support members are configured to engage the engine core adjacent to the downstream end of the engine core. Thus, the pair of forward support members and the pair of rear support members may support the engine core for transportation and/or maintenance purposes.

In some embodiments, the engine is a gas turbine engine including a fan case housing a fan and an engine core that houses at least one compressor and at least one turbine. The pair of forward support members are configured to engage the fan case. The pair of rear support members are configured to engage the engine core. Thus, the pair of forward support members and the pair of rear support members may support the fan case and the engine core, respectively, for transportation and/or maintenance purposes.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**FIG. 1** is a schematic sectional side view of a gas turbine engine;
**FIG. 2** is a schematic perspective view of a flat-packable engine stand, according to an embodiment of the present disclosure, for supporting a gas turbine engine;
**FIG. 3** is a schematic side view of a flat-packable engine stand, e.g., the stand shown in FIG. 2, supporting a gas turbine engine, e.g., the gas turbine engine of FIG. 1;
**FIG. 4** is a schematic side view of a flat-packable engine stand supporting an engine, according to another embodiment of the present disclosure;
**FIG. 5** is a schematic rear view of a flat-packable engine stand, e.g. that of FIGS. 2 and 3 or FIG. 4, supporting an engine;
**FIG. 6** is a schematic rear view of a flat-packable engine stand supporting an engine, according to another embodiment of the present disclosure;
**FIG. 7** is a schematic rear view of the flat-packable engine stand supporting an engine, according to yet another embodiment of the present disclosure;
**FIG. 8** is a schematic side view of a flat-packable engine stand supporting an engine, according to another embodiment of the present disclosure;
**FIG. 9** is a schematic side view of a flat-packable engine stand supporting an engine, according to another embodiment of the present disclosure;
**FIG. 10** is a schematic side view of the flat-packable engine stand of FIG. 9 where a base frame is disengaged from a mid frame;
**FIG. 11** is a schematic rear view of a flat-packable engine stand supporting an engine, according to another embodiment of the present disclosure; and
**FIG. 12** is a schematic rear view of the engine stand of FIG. 11 where the base frame is disengaged from the mid frame.

### Detailed description

Aspects and embodiments of the present disclosure will now be discussed with reference to the accompanying figures. Further aspects and embodiments will be apparent to those skilled in the art.

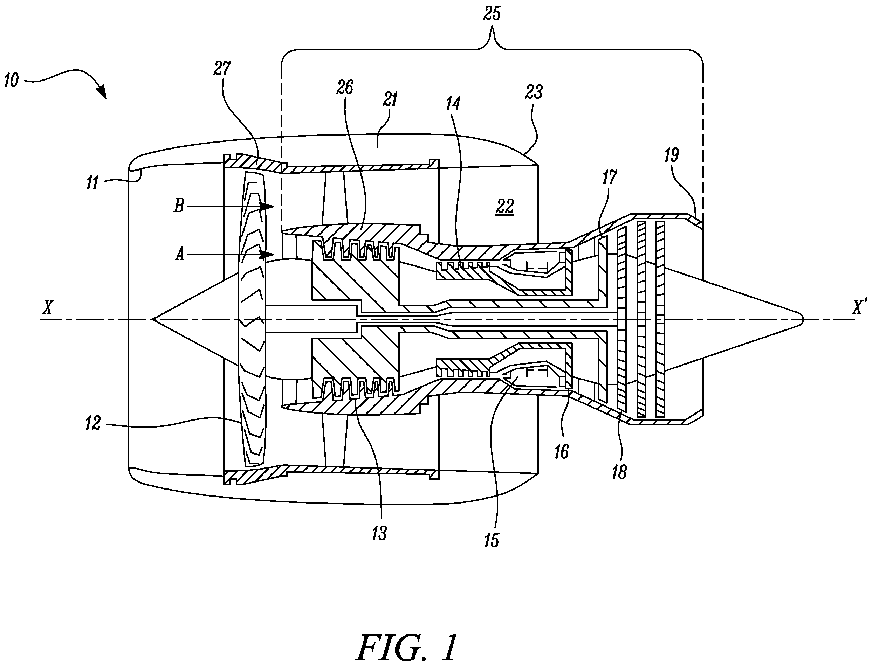

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low pressure compressor), an intermediate pressure compressor 13, a high pressure compressor 14, combustion equipment 15, a high pressure turbine 16, an intermediate pressure turbine 17, a low pressure turbine 18, and a core exhaust nozzle 19. A nacelle 21 generally surrounds the gas turbine engine 10 and defines the air intake 11, a bypass duct 22, and a bypass exhaust nozzle 23.

The intermediate and high pressure compressors 13, 14, the combustion equipment 15, the high, intermediate, and low pressure turbines 16, 17, 18, and the core exhaust nozzle 19 may constitute an engine core 25 of the gas turbine engine 10. In some embodiments, the engine core 25 further includes an engine casing 26 that at least partially encloses the one or more aforementioned components. A fan case 27 is disposed around the engine core 25. Specifically, the fan case 27 surrounds the compressive fan 12. In some embodiments, the fan case 27 is coupled to the engine core 25 and/or the nacelle 21 by various coupling mechanisms, such as fasteners (e.g., bolts), welding, brazing, and so forth.

The gas turbine engine 10 works in a conventional manner so that the air entering the air intake 11 is accelerated by the compressive fan 12 to produce two air flows: a first air flow A into the intermediate pressure compressor 13, and a second air flow B which passes through the bypass duct 22 to provide a propulsive thrust. The intermediate pressure compressor 13 compresses the first air flow A directed into it before delivering that air to the high pressure compressor 14 where further compression takes place.

The compressed air exhausted from the high pressure compressor 14 is directed into the combustion equipment 15 where it is mixed with fuel and the mixture is combusted. The resulting hot combustion products then expand through, and thereby drive the high, intermediate, and low pressure turbines 16, 17, 18 before being exhausted through the core exhaust nozzle 19 to provide additional propulsive thrust. The high, intermediate, and low pressure turbines 16, 17, 18 respectively drive the high and intermediate pressure compressors 14, 13, and the compressive fan 12 by suitable interconnecting shafts.

The gas turbine engine 10 as illustrated in FIG. 1 is exemplary in nature. Other gas turbine engines to which the present disclosure may be applied may have alternative configurations. By way of example, such engines may have an alternative number of interconnecting shafts and/or an alternative number of compressors and/or turbines. In some embodiments, the gas turbine engine 10 may be used in an aircraft. In some embodiments, the gas turbine engine 10 is an ultra-high bypass ratio engine (UHBPR). In addition, the present disclosure is equally applicable to other aero gas turbine engines, marine gas turbine engines, and land-based gas turbine engines.

In some embodiments, the gas turbine engine 10 includes detachable modules that constitute certain components of the gas turbine engine 10. In other words, the gas turbine engine 10 includes multiple modules and these modules are then assembled to form the gas turbine engine 10. For example, the engine core 25 and the fan case 27 are assembled separately and then connected to each other. Typically, the gas turbine engine 10 may include other modules, such as an intake module. The fan case 27 is generally coaxially disposed around the engine core 25. Specifically, the engine core 25 and the fan case 27 may be coaxially disposed about the principal rotational axis X-X'. Correct alignment between the engine core 25 and the fan case 27 may be required before the engine core 25 and the fan case 27 are moved proximal to each other and connected.

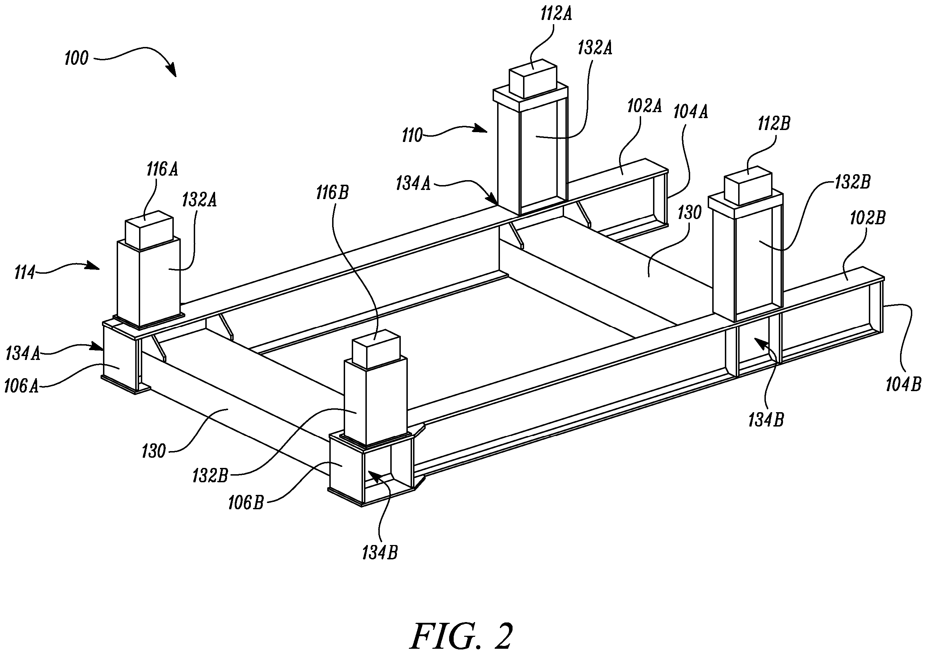

**FIG. 2** is a schematic perspective view of a flat-packable engine stand 100 for an engine (e.g., the gas turbine engine 10 shown in FIG. 1), according to an embodiment of the present disclosure. The flat-packable engine stand 100 is shown in an erected configuration in FIG. 2. In some embodiments, the engine stand 100 may support the engine during engine build and transportation activities. For example, the engine stand 100 may be suitable for use in maintaining and/or transportation of the engine, which includes detachable modules, e.g., the engine core 25, the fan case 27, etc., shown in FIG. 1.

The flat-packable engine stand 100 includes a pair of base beams 102A, 102B spaced apart from each other. Each base beam 102A, 102B includes a first end 104A, 104B and a second end 106A, 106B that is opposite to the first end 104A, 104B. Specifically, the base beam 102A includes the first end 104A and the second end 106A that is opposite to the first end 104A, and the base beam 102B includes the first end 104B and the second end 106B that is opposite to the first end 104B. The pair of base beams 102A, 102B may ensure that the engine supported on the engine stand 100 remains stable, or more specifically statically determinate, during transportation and/or maintenance.

In some embodiments, the pair of base beams 102A, 102B are substantially parallel. However, in other embodiments, the pair of base beams 102A, 102B may not be parallel. For example, the pair of base beams 102A, 102B may diverge, e.g., with a distance between the first ends 104A, 104B being greater than a distance between the second ends 106A, 106B to accommodate any dimension of the engine to be maintained and/or transported. In some embodiments, the flat-packable engine stand 100 may be configured such that an orientation of the pair of base beams 102A, 102B may be adjusted to accommodate dimensions of a variety of engines. In some embodiments, one or more additional base beams may be provided to enhance a robustness of the engine stand 100. In some embodiments, the engine stand 100 may be provided with a set of wheel assemblies (not shown). The set of wheel assemblies may enable ease of movement of the engine stand 100 for various purposes. The set of wheel assemblies may include multiple wheels located at suitable positions on the engine stand 100.

In some embodiments, each of the pair of base beams 102A, 102B may be made of any suitably rigid and strong material, typically a metal or an alloy. Further, each of the pair of base beams 102A, 102B may take any form based on application requirements. For example, each of the pair of base beams 102A, 102B may have a suitable cross-sectional shape, e.g., rectangle, square, polygonal, I-section, C-section, etc.

The flat-packable engine stand 100 further includes a forward support 110 that straddles the pair of base beams 102A, 102B between their respective first ends 104A, 104B and their respective second ends 106A, 106B. In some embodiments, the forward support 110 may be coupled to the pair of base beams 102A, 102B via any suitable coupling mechanism, e.g., detachable clamps, etc. The forward support 110 may assume a variety of forms based on application requirements to fulfil the purpose of supporting the engine. The forward support 110 includes a pair of forward support members 112A, 112B. Each of the pair of forward support members 112A, 112B may include suitable coupling mechanisms (e.g., a trunnion) for engaging the engine that may be specific to a type of the engine.

The flat-packable engine stand 100 further includes a rear support 114 that straddles the pair of base beams 102A, 102B adjacent to their respective second ends 106A, 106B. In some embodiments, the rear support 114 may be substantially similar to the forward support 110. In some embodiments, the rear support 114 may be coupled to the pair of base beams 102A, 102B via any suitable coupling mechanism, e.g., detachable clamps, etc. The rear support 114 may assume a variety of forms based on application requirements to fulfil the purpose of supporting the engine. The rear support 114 includes a pair of rear support members 116A, 116B. Each of the pair of rear support members 116A, 116B may include suitable coupling mechanisms (e.g., a trunnion) for engaging the engine that may be specific to a type of the engine.

In some embodiments, at least one of the forward support 110 and the rear support 114 further includes a transverse beam 130 extending between and coupled to the pair of base beams 102A, 102B. Advantageously, the transverse beam 130 may ensure stability of the pair of base beams 102A, 102B while supporting the engine. Thus, the transverse beam 130 may enhance the robustness of the engine stand 100 during transportation of the engine and/or maintenance.

In some embodiments, at least one of the forward support 110 and the rear support 114 further includes a pair of vertical beams 132A, 132B extending from opposing ends 134A, 134B of the transverse beam 130 towards the pair of forward support members 112A, 112B or the pair of rear support members 116A, 116B. Specifically, the vertical beam 132A extends from the end 134A of the transverse beam 130 towards the forward support member 112A or the rear support member 116A. Further, the vertical beam 132B extends from the end 134B of the transverse beam 130 towards the forward support member 112B or the rear support member 116B. The pair of vertical beams 132A, 132B may allow the forward support 110 and/or the rear support 114 to maintain their position with respect to the pair of base beams 102A, 102B when supporting the engine.

The engine stand 100 is flat-packable. In other words, the engine stand 100 may be disassembled, thereby enabling the engine stand 100 to be readily transported by rail, road, or even by air. For example, the engine stand 100 may be stored within a lower-hold of a passenger carrying aircraft. This may allow convenient, space-efficient, and cost-efficient storage and/or transportation of the engine stand 100. The engine stand 100 may be built up with minimal infrastructure or tools once delivered to a required location.

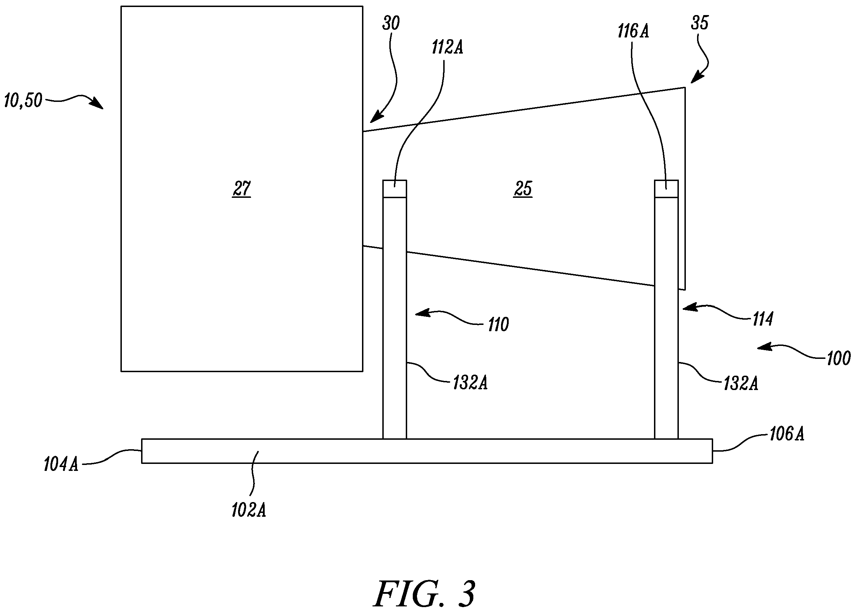

**FIG. 3** is a schematic side view of the engine stand 100 supporting an engine 50, according to an embodiment of the present disclosure. In the illustrated embodiment, the engine 50 is the gas turbine engine 10 shown in FIG. 1. The engine 50 is schematically shown in FIG. 3 for the purpose of illustration. Referring to FIGS. 1 and 3, in some embodiments, the gas turbine engine 10 (or the engine 50) includes the engine core 25 that houses at least one compressor (i.e., the intermediate pressure compressor 13 and the high pressure compressor 14) and at least one turbine (i.e., high, intermediate, and low pressure turbines 16, 17, 18). In some embodiments, the engine 50 includes various detachable modules, e.g., the engine core 25, the fan case 27, etc. Only the base beam 102A, the forward support member 112A, the rear support member 116A, and the vertical beams 132A are visible in FIG. 3.

Referring to FIGS. 2 and 3, the pair of forward support members 112A, 112B are configured to engage the engine 50. In some embodiments, the engine core 25 includes an upstream end 30 and a downstream end 35. The upstream end 30 of the engine core 25 is disposed adjacent to the fan case 27 and the downstream end 35 of the engine core 25 is disposed distal to the fan case 27. In some embodiments, the pair of forward support members 112A, 112B are configured to engage the engine core 25 adjacent to the upstream end 30 of the engine core 25.

In some embodiments, a position of the pair of forward support members 112A, 112B with respect to the pair of base beams 102A, 102B may vary based on application requirements. In the illustrated embodiment, the pair of forward support members 112A, 112B are positioned between the respective first ends 104A, 104B and the respective second ends 106A, 106B of the pair of base beams 102A, 102B. Specifically, the pair of forward support members 112A, 112B are positioned at a respective mid portion of the pair of base beams 102A, 102B. For example, the pair of forward support members 112A, 112B may be positioned such that the pair of forward support members 112A, 112B may engage the engine 50 at a mid-portion of the engine 50 for maintenance and/or removal of the compressive fan 12 (shown in FIG. 1).

In some embodiments, the pair of rear support members 116A, 116B are configured to engage the engine 50 rear of the forward support 110. Specifically, the pair of rear support members 116A, 116B are configured to engage the engine core 25 adjacent to the downstream end 35 of the engine core 25. Therefore, the pair of forward support members 112A, 112B of the forward support 110 and the pair of rear support members 116A, 116B of the rear support 114 may support the engine 50 for maintenance and/or transportation purposes. This may enable various modules the engine 50 to be disassembled, transported, and assembled as required.

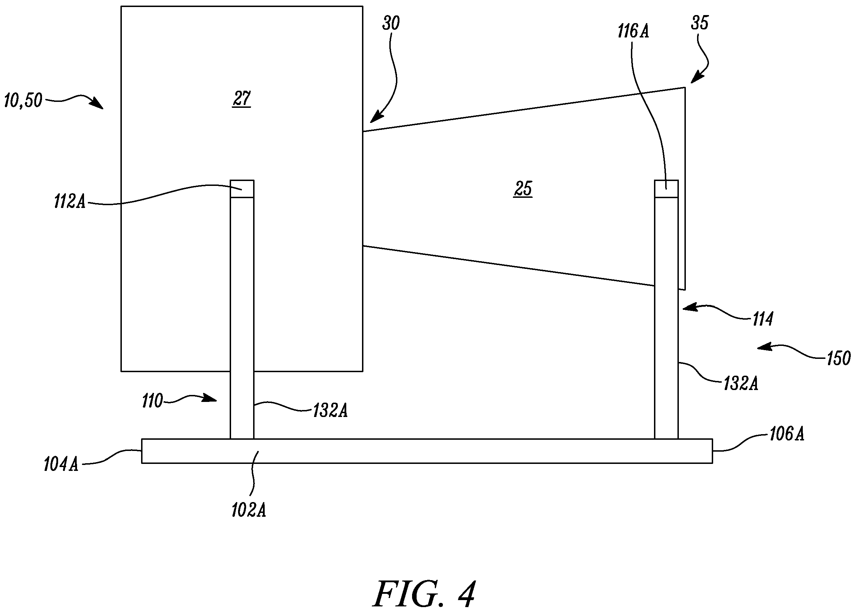

**FIG. 4** is a schematic side view of a flat-packable engine stand 150 supporting the engine 50, according to another embodiment of the present disclosure. The engine stand 150 may be substantially similar and functionally equivalent to the engine stand 100 (shown in FIG. 3), and same components in this embodiment are referred to by same reference numerals and differences between the embodiments are discussed. Specifically, in the illustrated embodiment of FIG. 4, the forward support 110 of the engine stand 150 is disposed proximal to the respective first ends 104A, 104B of the pair of base beams 102A, 102B. Only the base beam 102A, the forward support member 112A, the rear support member 116A, and the vertical beams 132A are visible in FIG. 4.

In the illustrated embodiment, the engine 50 is the gas turbine engine 10 shown in FIG. 1. The engine 50 is schematically shown in FIG. 4 for the purpose of illustration. Referring to FIGS. 1 and 3, in some embodiments, the gas turbine engine 10 (or the engine 50) includes the fan case 27 housing the compressive fan 12 and the engine core 25 that houses at least one compressor (i.e., the intermediate pressure compressor 13 and the high pressure compressor 14) and at least one turbine (i.e., high, intermediate, and low pressure turbines 16, 17, 18). In some embodiments, the gas turbine engine 10 may include various detachable modules.

Referring to FIGS. 2 and 4, in some embodiments, the pair of forward support members 112A, 112B are configured to engage the fan case 27. Thus, the forward support 110 may support the engine 50 via the fan case 27. Further, the pair of rear support members 116A, 116B are configured to engage the engine core 25. Therefore, the pair of forward support members 112A, 112B of the forward support 110 and the pair of rear support members 116A, 116B of the rear support 114 may support the engine 50 for maintenance and/or transportation purposes. This may enable various modules the engine 50 to be disassembled, transported, and assembled as required.

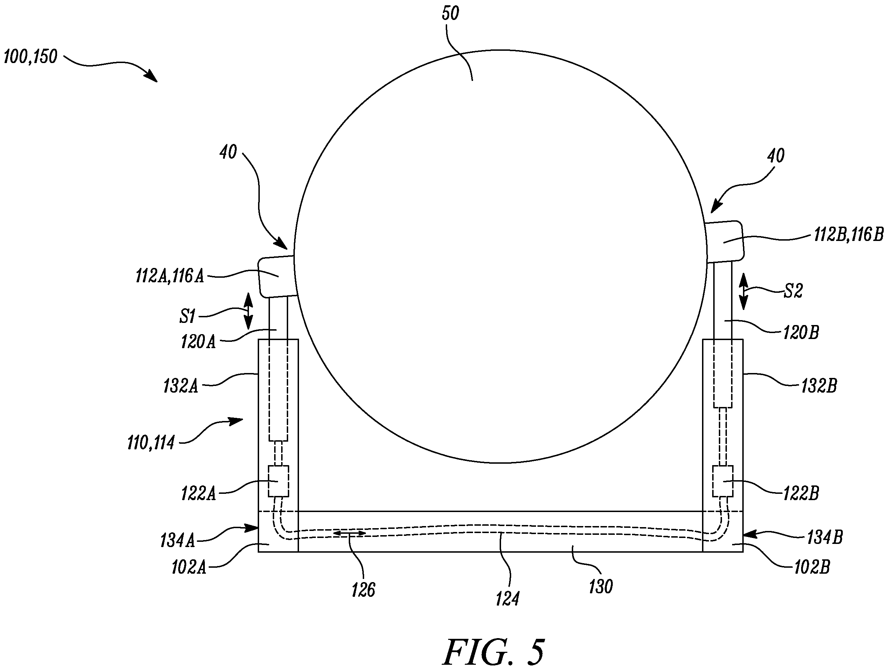

**FIG. 5** is a schematic rear view of the flat-packable engine stand 100, 150 supporting the engine 50, according to an embodiment of the present disclosure. Although the rear support 114 is visible in FIG. 5, however, the following description is equally applicable to the forward support 110 since the forward support 110 is substantially similar to the rear support 114. The teachings in the following description are described with reference to both the forward support 110 and the rear support 114. The engine 50 is schematically shown in FIG. 5 for the purpose of illustration.

As shown in FIG. 5, the pair of forward support members 112A, 112B are configured to engage opposing sides 40 of the engine 50. Similarly, the pair of rear support members 116A, 116B are configured to engage the opposing sides 40 of the engine 50. The pair of forward support members 112A, 112B and the pair of rear support members 116A, 116B may securely engage the opposing sides 40 of the engine 50.

At least one of the forward support 110 and the rear support 114 further includes a pair of telescoping legs 120A, 120B. Each telescoping leg 120A, 120B is operatively coupled to and configured to actuate a respective forward support member 112A, 112B from the pair of forward support members 112A, 112B or a respective rear support member 116A, 116B from the pair of rear support members 116A, 116B. Specifically, the telescoping leg 120A is operatively coupled to and configured to actuate the forward support member 112A or the rear support member 116A. Similarly, the telescoping leg 120B is operatively coupled to and configured to actuate the forward support member 112B or the rear support member 116B.

In some embodiments, each vertical beam 132A, 132B at least partially and slidably receives therein a respective telescoping leg 120A, 120B from the pair of telescoping legs 120A, 120B. Specifically, the vertical beam 132A at least partially and slidably receives therein the telescoping leg 120A and the vertical beam 132B at least partially and slidably receives therein the telescoping leg 120B.

At least one of the forward support 110 and the rear support 114 further includes a pair of hydraulic rams 122A, 122B. Each hydraulic ram 122A, 122B is operatively coupled to and configured to telescopically actuate a respective telescoping leg 120A, 120B from the pair of telescoping legs 120A, 120B. Specifically, the hydraulic ram 122A is operatively coupled to and configured to telescopically actuate the telescoping leg 120A. Similarly, the hydraulic ram 122B is operatively coupled to and configured to telescopically actuate the telescoping leg 120B. In some embodiments, each hydraulic ram 122A, 122B is received within a respective vertical beam 132A, 132B from the pair of vertical beams 132A, 132B. Specifically, the hydraulic ram 122A is received within the vertical beam 132A and the hydraulic ram 122B is received within the vertical beam 132B.

At least one of the forward support 110 and the rear support 114 further includes a hydraulic pipe 124 fluidly communicating the pair of hydraulic rams 122A, 122B to each other. The hydraulic pipe 124 is configured to allow a flow of a hydraulic fluid 126 between the pair of hydraulic rams 122A, 122B. In other words, the hydraulic pipe 124 may allow exchange of the hydraulic fluid 126 between the pair of hydraulic rams 122A, 122B. This may enable the pair of telescoping legs 120A, 120B to balance the opposing sides 40 of the engine 50 through exchange of the hydraulic fluid 126, thereby allowing the engine stand 100, 150 and the engine 50 to be statically determinate.

In other words, if the opposing sides 40 of the engine 50 are not in a same vertical position, the engine stand 100, 150 may account for this by exchanging the hydraulic fluid 126 between the pair of hydraulic rams 122A, 122B. Specifically, the telescoping leg 120A may allow movement of the respective forward support member 112A or the respective rear support member 116A along a vertical direction S1, and the telescoping leg 120B may allow movement of the respective forward support member 112B or the respective rear support member 116B along a vertical direction S2 to balance the opposing sides 40 of the engine 50. The opposing sides 40 of the engine 50 may automatically balance based on exchange of the hydraulic fluid 126 between the pair of hydraulic rams 122A, 122B since the pair of forward support members 112A, 112B or the pair of rear support members 116A, 116B may be actuated individually.

In the illustrated embodiment of FIG. 5, each telescoping leg 120A, 120B is directly coupled to and configured to telescopically acuate the respective forward support member 112A, 112B or the respective rear support member 116A, 116B. This may allow each telescoping leg 120A, 120B to directly actuate the respective forward support member 112A, 112B or the respective rear support member 116A, 116B to balance the opposing sides 40 of the engine 50. Further, the pair of vertical beams 132A, 132B may allow the respective telescoping leg 120A, 120B to move along a vertical direction only, thereby restricting lateral loads on the respective telescoping leg 120A, 120B and stabilizing the respective telescoping leg 120A, 120B. Thus, the pair of telescoping legs 120A, 120B may be capable of withstanding lateral loads, thereby allowing a greater load-share between the forward support 110 and the rear support 114 of the engine stand 100, 150. This may in turn reduce a complexity of the engine stand 100, 150, and therefore, a cost of the engine stand 100, 150.

In some embodiments, the hydraulic pipe 124 is at least partially received within the transverse beam 130. This may allow the hydraulic pipe 124 to be positioned on the flat-packable engine stand 100, 150 while protecting the hydraulic pipe 124. Further, the hydraulic pipe 124 may not require to be positioned directly beneath the engine 50, thereby allowing the engine 50 to be lowered close to the pair of base beams 102A, 102B. This may optimise an overall package size of the engine 50 and the engine stand 100, 150 for transportation purposes, thereby increasing opportunities to reduce transportation costs.

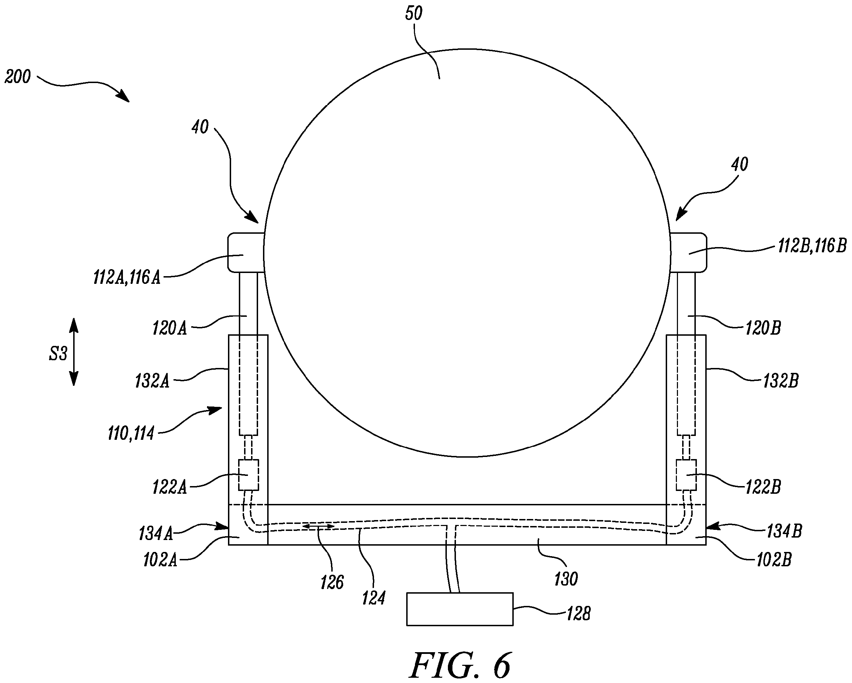

FIG. 6 is a schematic rear view of a flat-packable engine stand 200, according to another embodiment of the present disclosure. The engine stand 200 may be substantially similar and functionally equivalent to the engine stands 100, 150 (shown in FIG. 5), and same components in this embodiment are referred to by same reference numerals and differences between the embodiments are discussed.

Specifically, in the illustrated embodiment of FIG. 6, at least one of the forward support 110 and the rear support 114 further includes a hydraulic pump 128 fluidly coupled to the hydraulic pipe 124. In some embodiments, the hydraulic pump 128 may be a manually operated pump. In some embodiments, the hydraulic pump 128 may be a powered pump, such as an electric pump. The hydraulic pump 128 is schematically shown in FIG. 6 for the purpose of illustration. In some embodiments, the hydraulic pump 128 may be an integral part of a hydraulic system of the engine stand 100, 150.

In some embodiments, the hydraulic pump 128 may provide pressurized hydraulic fluid 126 to each of the pair of hydraulic rams 122A, 122B, thereby allowing the respective telescoping leg 120A, 120B to be raised or lowered along a vertical direction S3 with respect to the pair of base beams 102A, 102B. Therefore, a vertical height of the engine 50 on the engine stand 200 may be raised or lowered based on application requirements. This may enable reduction in the overall package size of the engine 50 and the engine stand 200 for transportation purposes. Additionally, this may also enable raising or lowering of the engine 50 during build up or maintenance. Additionally, this may allow raising or lowering of the engine 50 where an engine axis (e.g., the principal rotational axis X-X' shown in FIG. 1) requires levelling, e.g., on an uneven floor. Additionally, this may enable a rear end of the engine 50 (e.g., the downstream end 35 shown in FIG. 3) to be lowered to clear components on a pylon of an aircraft during installation/removal of the engine 50 from a wing of the aircraft.

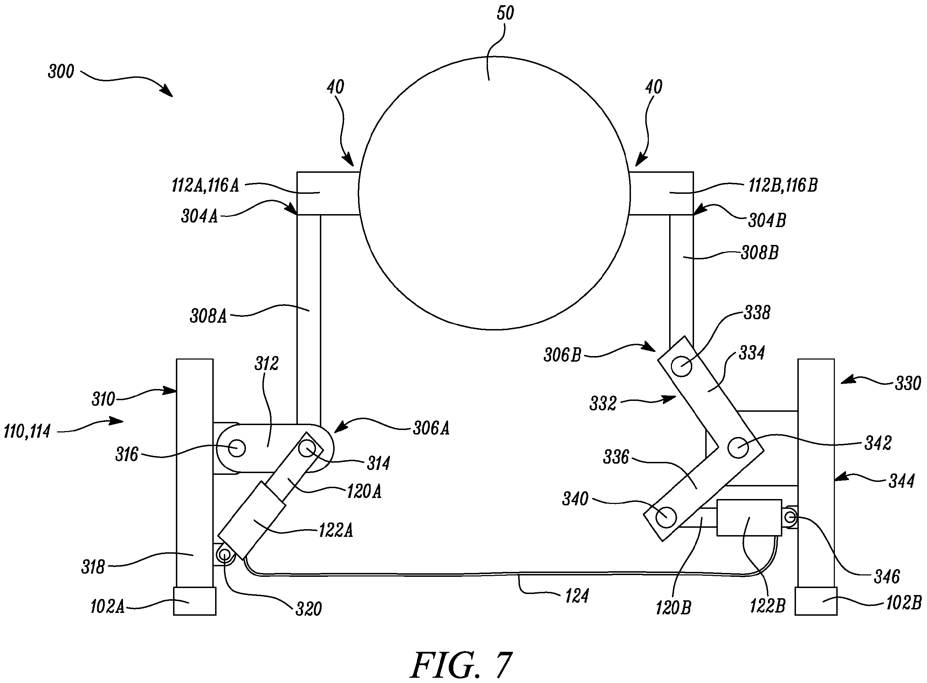

**FIG. 7** is a schematic rear view of a flat-packable engine stand 300 supporting the engine 50, according to yet another embodiment of the present disclosure. The engine stand 300 may be functionally equivalent to the engine stands 100, 150, 200 (shown in FIGS. 3-6), and same components in this embodiment are referred to by similar reference numerals and differences between the embodiments are discussed. Although the rear support 114 is visible in FIG. 7, however, the following description is equally applicable to the forward support 110 since the forward support 110 is substantially similar to the rear support 114. The teachings in the following description are described with reference to both the forward support 110 and the rear support 114. The engine 50 is schematically shown in FIG. 7 for the purpose of illustration.

In some embodiments, at least one of the forward support 110 and the rear support 114 further includes a pair of vertical beams 308A, 308B. Each vertical beam 308A, 308B includes a first end 304A and a second end 306B that is opposite to the first end 304A. The first end 304A, 304B of each vertical beam 308A, 308B is directly coupled to the respective forward support member 112A, 112B or the rear support member 116A, 116B. Specifically, the first end 304A of the vertical beam 308A is directly coupled to the respective forward support member 112A or the rear support member 116A. Similarly, the first end 304B of the vertical beam 308B is directly coupled to the respective forward support member 112B or the rear support member 116B.

At least one of the forward support 110 and the rear support 114 further includes a first linkage 310 pivotally coupled to the second end 306A of one vertical beam 308A from the pair of vertical beams 308A, 308B. In some embodiments, the first linkage 310 is coupled to one base beam 102A from the pair of base beams 102A, 102B. One telescoping leg 120A from the pair of telescoping legs 120A, 120B is pivotally coupled to and configured to telescopically actuate the first linkage 310.

In some embodiments, the one telescoping leg 120A is indirectly coupled to the respective forward support member 112A or the rear support member 116A via the first linkage 310 and the respective vertical beam 308A, thereby allowing the one telescoping leg 120A to actuate the forward support member 112A or the rear support member 116A. In some embodiments, one hydraulic ram 122A from the pair of hydraulic rams 122A, 122B is pivotally coupled to the first linkage 310. Thus, the first linkage 310 may provide support to the one hydraulic ram 122A. The one hydraulic ram 122A is operatively coupled to the one telescoping leg 120A.

In some embodiments, the first linkage 310 includes a first link 312 pivotally coupled to the second end 306A of the one vertical beam 308A and the one telescoping leg 120A at a first pivot point 314. Advantageously, the first pivot point 314 may allow the second end 306A of the one vertical beam 308A to rotate relative to the one telescoping leg 120A. In some embodiments, the first linkage 310 further includes a second link 318 pivotally coupled to the first link 312 at a second pivot point 316 spaced apart from the first pivot point 314. In some embodiments, the second link 318 of the first linkage 310 is coupled to the one base beam 102A.

The second link 318 is pivotally coupled to the one hydraulic ram 122A at a third pivot point 320 spaced apart from each of the first pivot point 314 and the second pivot point 316. Advantageously, the second pivot point 316 may allow the first link 312 to rotate relative to the second link 318 and the third pivot point 320 may allow the one hydraulic ram 122A to rotate relative to the second link 318.

At least one of the forward support 110 and the rear support 114 further includes a second linkage 330 pivotally coupled to the second end 306B of the other vertical beam 308B from the pair of vertical beams 308A, 308B. In some embodiments, the second linkage 330 is coupled to the other base beam 102B from the pair of base beams 102A, 102B. The other telescoping leg 120B from the pair of telescoping legs 120A, 120B is pivotally coupled to and configured to telescopically actuate the second linkage 330.

In some embodiments, the other telescoping leg 120B is indirectly coupled to the respective forward support member 112B or the rear support member 116B via the second linkage 330 and the respective vertical beam 308B, thereby allowing the other telescoping leg 120B to actuate the forward support member 112B or the rear support member 116B. The other hydraulic ram 122B from the pair of hydraulic rams 122A, 122B is pivotally coupled to the second linkage 330. Thus, the second linkage 330 may provide support to the other hydraulic ram 122B. The other hydraulic ram 122B is operatively coupled to the other telescoping leg 120B.

In some embodiments, the second linkage 330 includes a first link 332 including a first arm 334 and a second arm 336 inclined to the first arm 334. The first arm 334 is pivotally coupled to the second end 306B of the other vertical beam 308B at a first pivot point 338. The second arm 336 is pivotally coupled to the other telescoping leg 120B at a second pivot point 340 spaced apart from the first pivot point 338. Advantageously, the first pivot point 338 may allow the first arm 334 to rotate relative to the second end 306B of the other vertical beam 308B and the second pivot point 340 may allow the other telescoping leg 120B to rotate relative to the second arm 336.

In some embodiments, the second linkage 330 further includes a second link 344 pivotally coupled to the first link 332 at a third pivot point 342 spaced apart from each of the first pivot point 338 and the second pivot point 340. In some embodiments, the second link 344 of the second linkage 330 is coupled to the other base beam 102B. The second link 344 is pivotally coupled to the other hydraulic ram 122B at a fourth pivot point 346 spaced apart from each of the first pivot point 338, the second pivot point 340, and the third pivot point 342. Advantageously, the third pivot point 342 may allow the second link 344 to rotate relative to the first link 332 and the fourth pivot point 346 may allow the other hydraulic ram 122B to rotate relative to the second link 344.

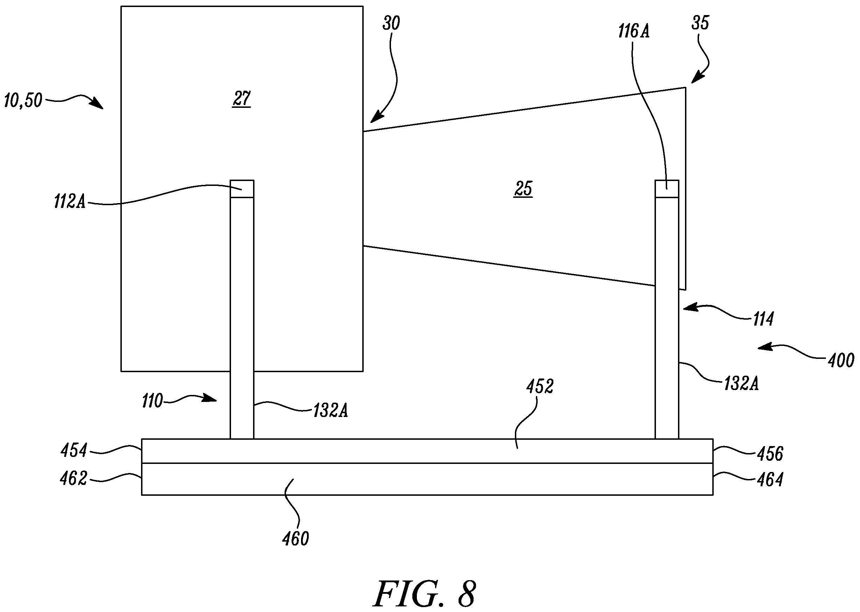

FIG. 8 is a schematic side view of a flat-packable engine stand 400 supporting the engine 50, according to another embodiment of the present disclosure. The engine stand 400 may be functionally equivalent to the engine stands 100, 150, 200, 300 (shown in FIGS. 3-7), and same components in this embodiment are referred to by similar reference numerals and differences between the embodiments are discussed. The engine 50 is schematically shown in FIG. 8 for the purpose of illustration. In the illustrated embodiment, the engine 50 is the gas turbine engine 10 shown in FIG. 1. The engine 50 includes various detachable modules, e.g., the engine core 25, the fan case 27, etc. Only the forward support member 112A, the rear support member 116A, and the vertical beams 132A are visible in FIG. 8.

In some embodiments, the flat-packable engine stand 400 further includes a mid frame 452 including the pair of base beams 102A, 102B (shown in FIG. 2). The engine 50 is supported on the mid frame 452. The mid frame 452 includes a first end 454 and a second end 456 opposite to the first end 454. The first end 454 of the mid frame 452 is disposed adjacent to the respective first ends 104A, 104B (shown in FIG. 2) of the pair of base beams 102A, 102B. Similarly, the second end 454 of the mid frame 452 is disposed adjacent to the respective second ends 106A, 106B (shown in FIG. 2) of the pair of base beams 102A, 102B.

In some embodiments, the flat-packable engine stand 400 further includes a base frame 460 disposed adjacent to and removably coupled to the mid frame 452. Thus, the mid frame 452 rests on the base frame 460 while the engine 50 is supported by the mid frame 452. The base frame 460 incudes a first end 462 and a second end 464 opposite to the first end 462. The first end 462 of the base frame 460 is disposed adjacent to the first end 454 of the mid frame 452 and the second end 464 of the base frame 460 is disposed adjacent to the second end 456 of the mid frame 452.

In some embodiments, the base frame 460 may include arrangements (not shown) such as castors, tie-down rings, etc. to assist the engine stand 400 for engine movement and transportation. The mid frame 452 may disengage with the base frame 460 when required allowing the engine 50 and the mid frame 452 to be separated from the base frame 460.

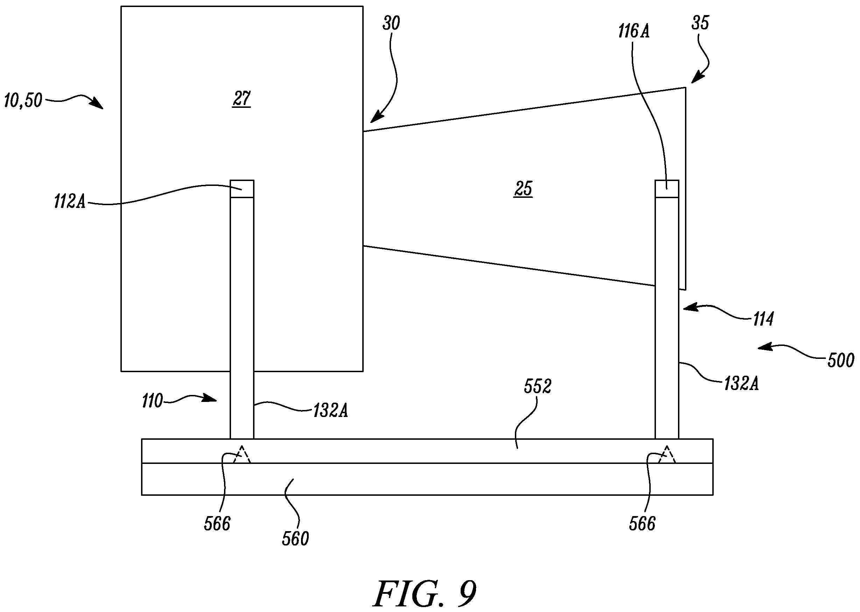

**FIG. 9** is a schematic side view of a flat-packable engine stand 500 supporting the engine 50, according to another embodiment of the present disclosure. The engine stand 500 may be functionally equivalent to the engine stands 100, 150, 200, 300, 400 (shown in FIGS. 3-8), and same components in this embodiment are referred to by similar reference numerals and differences between the embodiments are discussed. The engine 50 is schematically shown in FIG. 9 for the purpose of illustration. In the illustrated embodiment, the engine 50 is the gas turbine engine 10 shown in FIG. 1. The engine 50 includes various detachable modules, e.g., the engine core 25, the fan case 27, etc. Only the forward support member 112A, the rear support member 116A, and the vertical beams 132A are visible in FIG. 9.

In the illustrated embodiment, the flat-packable engine stand 500 further includes a mid frame 552 including the pair of base beams 102A, 102B (shown in FIG. 2). In some embodiments, the engine stand 500 further includes a base frame 560 configured to engage with the mid frame 552. Specifically, FIG. 9 illustrates the engine stand 500 where the base frame 560 is engaged with the mid frame 552. In the illustrated embodiment, the base frame 560 includes a plurality of locator members 566 that are configured to engage the base frame 560 with the mid frame 552.

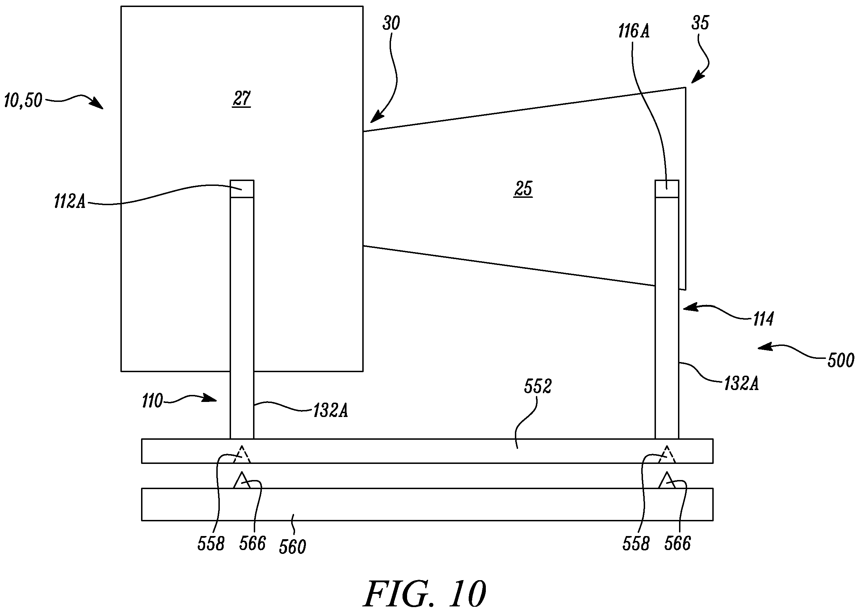

**FIG. 10** is a schematic side view of the engine stand 500 supporting the engine 50 where the base frame 560 is disengaged from the mid frame 552. Referring to FIGS. 9 and 10, in some embodiments, the base frame 560 includes a plurality of locator members 566 and the mid frame 552 includes a plurality of locator recesses 558 (shown in FIG. 10) formed in the mid frame 552. Each locator member 566 from the plurality of locator members 566 is configured to be received within a corresponding locator recess 558 from the plurality of locator recesses 558, thereby engaging the base frame 560 with the mid frame 552. The plurality of locator members 566 and the plurality of locator recesses 558 may function to position the base frame 560 relative to the mid frame 552.

In the illustrated embodiment of FIGS. 9 and 10, each locator member 566 is conical shaped. However, it should be noted that the plurality of locator members 566 may have any suitable shape, including, but not limited to, frustoconical shape, cylindrical shape, irregular shape, etc. Further, the plurality of locator members 566 may be made of any suitably rigid and strong material, typically a metal or an alloy.

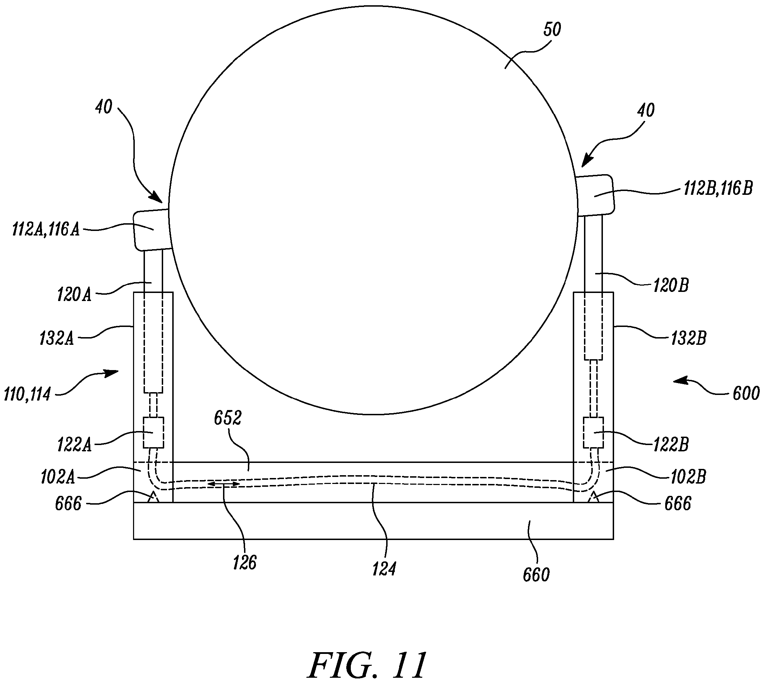

**FIG. 11** is a schematic rear view of a flat-packable engine stand 600 supporting the engine 50, according to another embodiment of the present disclosure. Although the rear support 114 is visible in FIG. 11, however, the following description is equally applicable to the forward support 110. The engine 50 is schematically shown in FIG. 11 for the purpose of illustration. The engine stand 600 may be functionally equivalent to the engine stands 100, 150, 200, 300, 400, 500 (shown in FIGS. 3-10), and same components in this embodiment are referred to by similar reference numerals and differences between the embodiments are discussed.

In the illustrated embodiment, the flat-packable engine stand 600 further includes a mid frame 652 including the pair of base beams 102A, 102B. In some embodiments, the engine stand 600 further includes a base frame 660 configured to engage with the mid frame 652. Specifically, FIG. 11 illustrates the engine stand 400 where the base frame 660 is engaged with the mid frame 652.

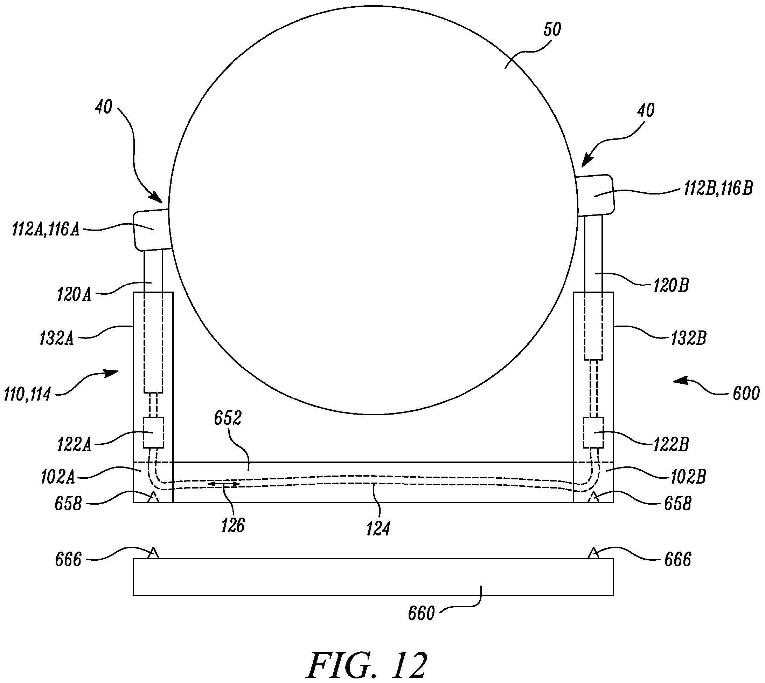

**FIG. 12** is a schematic rear view of the flat-packable engine stand 600 supporting the engine 50 where the base frame 660 is disengaged from the mid frame 652. Referring to FIGS. 11 and 12, in some embodiments, the base frame 660 includes a plurality of locator members 666 and the mid frame 652 includes a plurality of locator recesses 658 (shown in FIG. 12) formed in the mid frame 652. Each locator member 666 from the plurality of locator members 666 is configured to be received by a corresponding locator recess 658 from the plurality of locator recesses 658, thereby engaging the base frame 660 with the mid frame 652. The plurality of locator members 666 and the plurality of locator recesses 658 may function to position the base frame 660 relative to the mid frame 652.

In the illustrated embodiment of FIGS. 11 and 12, each locator member 666 is conical shaped. However, it should be noted that the plurality of locator members 666 may have any suitable shape, including, but not limited to, frustoconical shape, cylindrical shape, irregular shape, etc. Further, the plurality of locator members 666 may be made of any suitably rigid and strong material, typically a metal or an alloy.

Referring to FIGS. 1-12, the flat-packable engine stand 100, 150, 200, 300, 400, 500, 600 of the present disclosure includes the forward support members 112A, 112B and the rear support members 116A, 116B that are configured to engage the opposing sides 40 of the engine 50. Each telescoping leg 120A, 120B is configured to actuate the respective forward support member 112A, 112B or the respective rear support member 116A, 116B. Further, each hydraulic ram 122A, 122B is configured to telescopically actuate the respective telescoping leg 120A, 120B from the pair of telescoping legs 120A, 120B. The hydraulic pipe 124 fluidly communicates the pair of hydraulic rams 122A, 122B to each other, allowing a flow of the hydraulic fluid 126 between the pair of hydraulic rams 122A, 122B. This may enable the pair of telescoping legs 120A, 120B to balance the opposing sides 40 of the engine 50 through exchange of the hydraulic fluid 126, thereby allowing the engine stand 100, 150, 200, 300, 400, 500, 600 and the engine 50 to be statically determinate. In other words, if the opposing sides 40 of the engine 50 are not in a same vertical position, the engine stand 100, 150, 200, 300, 400, 500, 600 may account for this by exchanging the hydraulic fluid 126 between the pair of hydraulic rams 122A, 122B. Specifically, each telescoping leg 120A, 120B may allow movement of the respective forward support member 112A, 112B or the respective rear support member 116A, 116B to balance the opposing sides 40 of the engine 50. The opposing sides 40 of the engine 50 may automatically balance based on exchange of the hydraulic fluid 126 between the pair of hydraulic rams 122A, 122B.

Additionally, the flat-packable engine stand 100, 150, 200, 300, 400, 500, 600 of the present disclosure utilizes the pair of telescoping legs 120A, 120B which ensures that the respective hydraulic ram 122A, 122B is exposed to vertical loads only. Thus, the pair of telescoping legs 120A, 120B may be capable of withstanding lateral loads when compared to balance beams of current designs, thereby allowing a greater load-share between the forward support 110 and the rear support 114 of the engine stand 100, 150, 200, 300, 400, 500, 600. This may in turn reduce a complexity of the engine stand 100, 150, 200, 300, 400, 500, 600, and therefore, a cost of the engine stand 100, 150, 200, 300, 400, 500, 600. Furthermore, the hydraulic pipe 124 may not require to be positioned directly beneath the engine 50, thereby allowing the engine 50 to be lowered close to the pair of base beams 102A, 102B. This may optimise an overall package size of the engine 50 and the engine stand 100, 150, 200, 300, 400, 500, 600 for transportation purposes, thereby increasing opportunities to reduce transportation costs.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A flat-packable engine stand (100, 150, 200, 300, 400, 500, 600) for an engine (50), the flat-packable engine stand (100, 150, 200, 300, 400, 500, 600) comprising:
a pair of base beams (102A, 102B) spaced apart from each other, each base beam (102A, 102B) having a first end (104A, 104B) and a second end (106A, 106B) that is opposite to the first end (104A, 104B);
a forward support (110) that straddles the pair of base beams (102A, 102B) between their respective first ends (104A, 104B) and their respective second ends (106A, 106B), the forward support (110) comprising a pair of forward support members (112A, 112B) that are configured to engage opposing sides (40) of the engine (50); and
a rear support (114) that straddles the pair of base beams (102A, 102B) adjacent their respective second ends (106A, 106B), the rear support (114) comprising a pair of rear support members (116A, 116B) that are configured to engage the opposing sides (40) of the engine (50) rear of the forward support (110);
wherein at least one of the forward support (110) and the rear support (114) further comprises:
a pair of telescoping legs (120A,120B), wherein each telescoping leg (120A, 120B) is operatively coupled to and configured to actuate a respective forward support member (112A, 112B) from the pair of forward support members (112A, 112B) or a respective rear support member (116A, 116B) from the pair of rear support members (116A, 116B);
a pair of hydraulic rams (122A, 122B), wherein each hydraulic ram (122A, 122B) is operatively coupled to and configured to telescopically actuate a respective telescoping leg (120A, 120B) from the pair of telescoping legs (120A, 120B); and
a hydraulic pipe (124) fluidly communicating the pair of hydraulic rams (122A, 122B) to each other, wherein the hydraulic pipe (124) is configured to allow a flow of a hydraulic fluid (126) between the pair of hydraulic rams (122A, 122B).

2. The flat-packable engine stand (100, 150, 200, 400, 500, 600) of claim 1, wherein each telescoping leg (120A, 120B) is directly coupled to and configured to telescopically actuate the respective forward support member (112A, 112B) or the respective rear support member (116A, 116B).

3. The flat-packable engine stand (100, 150, 200, 400, 500, 600) of claim 2, wherein at least one of the forward support (110) and the rear support (114) further comprises:
a transverse beam (130) extending between and coupled to the pair of base beams (102A, 102B); and
a pair of vertical beams (132A, 132B) extending from opposing ends (134A, 134B) of the transverse beam (130) towards the pair of forward support members (112A, 112B) or the pair of rear support members (116A, 116B), wherein each vertical beam (132A, 132B) at least partially and slidably receives therein a respective telescoping leg (120A, 120B) from the pair of telescoping legs (120A, 120B).

4. The flat-packable engine stand (100, 150, 200, 400, 500, 600) of claim 3, wherein each hydraulic ram (122A, 122B) is received within a respective vertical beam (132A, 132B) from the pair of vertical beams (132A, 132B).

5. The flat-packable engine stand (100, 150, 200, 400, 500, 600) of claim 3 or 4, wherein the hydraulic pipe (124) is at least partially received within the transverse beam (130).

6. The flat-packable engine stand (300) of claim 1, wherein at least one of the forward support (110) and the rear support (114) further comprises:
a pair of vertical beams (308A, 308B), each vertical beam (308A, 308B) comprising a first end (304A, 304B) and a second end (306A, 306B) that is opposite to the first end (304A, 304B), wherein the first end (304A, 304B) of each vertical beam (308A, 308B) is directly coupled to the respective forward support member (112A, 112B) or the rear support member (116A, 116B);
a first linkage (310) pivotally coupled to the second end (306A) of one vertical beam (308A) from the pair of vertical beams (308A, 308B); and
a second linkage (330) pivotally coupled to the second end (306B) of the other vertical beam (308B) from the pair of vertical beams (308A, 308B);
wherein:
one telescoping leg (120A) from the pair of telescoping legs (120A, 120B) is pivotally coupled to and configured to telescopically actuate the first linkage (310); and
the other telescoping leg (120B) from the pair of telescoping legs (120A, 120B) is pivotally coupled to and configured to telescopically actuate the second linkage (330).

7. The flat-packable engine stand (300) of claim 6, wherein:
one hydraulic ram (122A) from the pair of hydraulic rams (122A, 122B) is pivotally coupled to the first linkage (310), the one hydraulic ram (122A) being operatively coupled to the one telescoping leg (120A); and
the other hydraulic ram (122B) from the pair of hydraulic rams (122A, 122B) is pivotally coupled to the second linkage (330), the other hydraulic ram (122B) being operatively coupled to the other telescoping leg (120B).

8. The flat-packable engine stand (300) of claim 6 or 7, wherein the first linkage (310) comprises a first link (312) pivotally coupled to the second end (306A) of the one vertical beam (308A) and the one telescoping leg (120A) at a first pivot point (314).

9. The flat-packable engine stand (300) of claim 8, wherein the first linkage (310) further comprises a second link (318) pivotally coupled to the first link (312) at a second pivot point (316) spaced apart from the first pivot point (314), and wherein the second link (318) is pivotally couped to the one hydraulic ram (122A) at a third pivot point (320) spaced apart from each of the first pivot point (314) and the second pivot point (316).

10. The flat-packable engine stand (300) of any one of claims 6 to 9, wherein the second linkage (330) comprises a first link (332) comprising a first arm (334) and a second arm (336) inclined to the first arm (334), wherein the first arm (334) is pivotally coupled to the second end (306B) of the other vertical beam (308B) at a first pivot point (338), and wherein the second arm (336) is pivotally coupled to the other telescoping leg (120B) at a second pivot point (340) spaced apart from the first pivot point (338).

11. The flat-packable engine stand (300) of claim 10, wherein the second linkage (330) further comprises a second link (344) pivotally coupled to the first link (332) at a third pivot point (342) spaced apart from each of the first pivot point (338) and the second pivot point (340), and wherein the second link (344) is pivotally coupled to the other hydraulic ram (122B) at a fourth pivot point (346) spaced apart from each of the first pivot point (338), the second pivot point (340), and the third pivot point (342).

12. The flat-packable engine stand (200) of any preceding claim, wherein at least one of the forward support (110) and the rear support (114) further comprises a hydraulic pump (128) fluidly coupled to the hydraulic pipe (124).

13. The flat-packable engine stand (400, 500, 600) of any preceding claim, further comprises a mid frame (452, 552, 652) comprising the pair of base beams (102A, 102B), and a base frame (460, 560, 660) configured to engage with the mid frame (452, 552, 652).

14. The flat-packable engine stand (100) of any preceding claim, wherein the engine (50) is a gas turbine engine (10) comprising an engine core (25) that houses at least one compressor (13, 14) and at least one turbine (16, 17, 18), the engine core (25) having an upstream end (30) and a downstream end (35), wherein the pair of forward support members (112A, 112B) are configured to engage the engine core (25) adjacent to the upstream end (30) of the engine core (25), and wherein the pair of rear support members (116A, 116B) are configured to engage the engine core (25) adjacent to the downstream end (35) of the engine core (25).

15. The flat-packable engine stand (150, 400, 500) of any one of claims 1 to 14, wherein the engine (50) is a gas turbine engine (10) comprising a fan case (27) housing a fan (12) and an engine core (25) that houses at least one compressor (13, 14) and at least one turbine (16, 17, 18), wherein the pair of forward support members (112A, 112B) are configured to engage the fan case (27), and wherein the pair of rear support members (116A, 116B) are configured to engage the engine core (25).
